# EUROPÄISCHE PATENTSCHRIFT

(11) **EP 1 166 957 B1**
(45) Veröffentlichungstag und Bekanntmachung des Hinweises auf die Patenterteilung: **30.07.2003**
(21) Anmeldenummer: 01114309.6
(22) Anmeldetag: 13.06.2001
(51) Int. Cl.: B23Q 7/14

(54) **Positionierungs- und Spannsystem**
System for positioning and clamping
Système de placer et de serrage

(30) Priorität: 30.06.2000 DE 10031103
(43) Veröffentlichungstag der Anmeldung: 02.01.2002
(73) Patentinhaber: GROB-Werke Dr. h.c. mult. Dipl.-Ing. Burkhart Grob e.K., 87719 Mindelheim (DE)
(72) Erfinder: Stave, Hinrich, Dr., 87719 Mindelheim (DE); Windel, Friedrich, 86899 Landsberg (DE)
(74) Vertreter: Pfister, Helmut, Dipl.-Ing.

(56) Entgegenhaltungen:
- CH-A- 688 766
- DE-A- 2 502 302
- DE-A- 19 609 371
- US-A- 4 818 171

## Beschreibung

Die Erfindung betrifft ein Positionierungs- und Spannsystem, das insbesondere zum Positionieren und Spannen einer werkstücktragenden Palette auf einem Palettenaufnahmetisch geeignet ist. Das System umfaßt mindestens zwei auf dem Palettenaufnahmetisch verteilt angeordnete, kegelförmige Auflager und mindestens zwei mit den kegelförmigen Auflagern zusammenwirkende Kegelhülsen, die mit der Palette tischseitig verbunden sind (DE-A-196 09 371).

Werkstücke, die beispielsweise in metall- oder kunststoffverarbeitenden Betrieben in einem Bearbeitungsvorgang mit verschiedenen Maschinen bearbeitet werden müssen, werden bekanntlich auf Paletten montiert, um ein schnelles und exaktes Auswechseln des Werkstückes zusammen mit der Palette am Bearbeitungsplatz einer Maschine gegen ein nachkommendes Werkstück ohne weitere Demontage bzw. Montage des Werkstückes selber zu ermöglichen. Durch die Verwendung einer Palette, auf welcher das Werkstück montiert ist, ist es deshalb erforderlich, daß zur Herstellung der Bearbeitungsstellung eines Werkstückes lediglich die Palette und nicht das Werkstück selber an dem Bearbeitungsplatz eingespannt bzw. ausgespannt wird. Ein derartiges Schnellwechselsystem des Werkstückes hat sich insbesondere in Bearbeitungszentren mit mehr als einer das Werkstück bearbeitenden Maschine als vorteilhaft erwiesen.

Die einzuspannende Palette wird zusammen mit dem sich darauf befindenden Werkstück auf einem Bearbeitungstisch bzw. einem Palettenaufnahmetisch, der sich an oder auf einer Werkzeugmaschine befinden kann, positioniert und festgespannt. Eine derartige Positionierung muß nicht nur äußerst genau erfolgen können, da von der genauen Positionierung die exakte Bearbeitung des Werkstückes abhängt, sondern sie muß auch, ebenso wie das Spannen der Palette, leicht durchführbar sein, wobei zu beachten ist, daß der Bereich des Palettenaufnahmetisches in der Regel durch Späne und Schmier- bzw. Kühlflüssigkeit stark verschmutzt ist.

Der Vorteil der Verwendung einer Palette für das Einspannen eines Werkstückes liegt darin, daß die Palette eine immer gleichbleibende Anschlußgeometrie im Gegensatz zum Werkstück, welches ausgewechselt wird, aufweist und so eine sehr schnelle Positionierung und Spannung des Werkstückes relativ zu den Arbeitsspindeln der Bearbeitungsmaschinen bzw. Werkzeugmaschinen aufgrund dieser gleichbleibenden Anschlußgeometrie möglich ist.

Die Paletten können eine Ausdehnung von beispielsweise 800 x 800 mm bis 800 x 1000 mm aufweisen.

Der Bearbeitungs- bzw. Palettenaufnahmetisch kann als Rundtisch ausgebildet sein, welcher eine um eine im wesentlichen vertikal orientierte Drehachse drehbar gelagerte Palettenaufnahme aufweist.

Bekannte Palettenspannplätze bestehen beispielsweise aus zwei Bolzen, welche auf dem Bearbeitungstisch in einer gemeinsamen Ebene angeordnet sind und in entsprechend angeordneten Buchsen an der Palettenunterseite aufgenommen werden. Ein solches Plansystem erlaubt das Festlegen der Palette in einer Ebene, wobei die Höhe der zu positionierenden Palette durch das Aufliegen derjenigen auf dem Bearbeitungstisch bestimmt wird.

Bekannt ist auch eine Anordnung zum Positionieren einer Palette auf einem Bearbeitungstisch, bei welcher vier Kegel auf dem Bearbeitungstisch angeordnet sind. Die Kegel sind mit einem Kegelwinkel von ca. 60° verhältnismäßig flach und weisen einen Durchmesser von ca. 80 mm auf. An der Palettenunterseite sind entsprechend den auf dem Tisch angeordneten Kegeln kegelhülsenförmige Buchsen vorhanden, die mit den Kegeln zusammenwirken sollen. Zum Spannen der Palette sind desweiteren Spannzangen an jedem Kegel vorhanden, die ein Verrutschen der Palette auf dem Bearbeitungstisch nach erfolgter Positionierung vermeiden sollen. Durch die vierfache Anordnung der Kegel, die im übrigen nicht nur eine Positionierung in Tischebene, sondern auch senkrecht zur Tischebene erlauben, ist ein solches System zweimal vierfach überbestimmt. Das bedeutet, daß Maßungenauigkeiten bei nur einem der vier Kegel die gesamte Anordnung ungenau werden lassen, also eine präzise Festlegung der Palette auf dem Bearbeitungstisch nicht mehr möglich ist. Eine solche Maßungenauigkeit von nur einem Kegel kann schon dadurch auftreten, daß zusätzliche Schichten, wie beispielsweise Verunreinigungen, sich auf dessen Kegeloberfläche mehr als auf der Kegeloberfläche des benachbarten Kegels abgelagert haben.

Somit liegt der Erfindung die Aufgabe zugrunde, das Positionieren und Spannen von werkstücktragenden Paletten auf einem Palettenaufnahmetisch einer Werkzeugmaschine bzw. in Bearbeitungszentren derart zu verbessern, daß keine Überbestimmung der gesamten Anordnung, eine schnelle, genaue und einfache Positionierung der Palette auf dem Palettenaufnahmetisch und ein zuverlässiges und festes verspannen der Palette auf dem Palettenaufnahmetisch möglich ist, sowie die aufgezählten Nachteile der Systeme gemäß dem Stand der Technik zu überwinden.

Zur Lösung dieser Aufgabe geht die Erfindung von einem Palettenaufnahmetisch mit mindestens zwei kegelförmigen Auflagern und den damit zusammenwirkenden Kegelhülsen an einer Palette aus, bei dem der mindestens eine Kegelwinkel einer der kegelförmigen Auflager und der damit zusammenwirkenden Kegelhülse eine geeignete Winkelgröße zum Eintritt einer selbshemmenden Verbindung zwischen Auflager und Kegelhülse bei Zusammenwirken derjenigen aufweist.

Bevorzugte Ausführungsformen dieses Positionierungs- und Spannsystems sind in den Unteransprüchen gekennzeichnet.

Durch das erfindungsgemäße System wird einerseits erreicht, daß durch die Verwendung eines steileren Kegelwinkels ein Schrumpfsitz der Kegelhülse auf dem Kegelauflager eintritt, sobald eine Spannkraft mittels Klauen auf einen Zapfen, der in der Kegelhülse angeordnet ist, ausgeübt wird. Dadurch ergibt sich eine Verbindung zwischen Kegelhülse und Kegel, die nach Beendigung der Spannkraftausübung wieder lösbar ist, denn aufgrund der Verwendung eines steileren Kegelwinkels löst sich die durch die Spannkraft gedehnte Kegelhülse von dem durch die Spannkraft gestauchten Kegelauflager und läßt einen Spalt zwischen kegelförmigen Auflager und der Kegelhülse in axialer Richtung von ca. 0,1 ... 0,15 mm entstehen.

Andererseits wird auch die Positionierung der Palette auf dem Palettenaufnahmetisch durch die Verwendung eines steileren Winkels für die Kegelform in dem Auflager erleichtert, denn dadurch wird der Zentrierweg der Kegelhülse auf das kegelförmige Auflager auf ca. 10 mm verlängert, wodurch ein frühzeitiges Zentrieren der Palette beim Positionierungsvorgang auf dem Palettentisch ermöglicht wird.

In einer vorteilhaften Ausführungsform hat das kegelförmige Auflager und die damit zusammenwirkende Kegelhülse eine zweistufige Kegelform mit einem von der Kegelspitze aus betrachteten ersten und zweiten Kegelwinkel, wobei der zweite Kegelwinkel eine geringere Winkelgröße als der erste Kegelwinkel aufweist. Der zweite Kegelwinkel kann gleichzeitig bei der Kegelhülse als ringförmiger Vorsprung in Richtung des Tisches, also am unteren Ende der Kegelhülse, sofern der Tisch horizontal angeordnet ist, ausgebildet sein, und das kegelförmige Auflager weist als Gegenstück eine damit zusammenwirkende, ringförmige Planauflage auf. Hierdurch ergibt sich die Kombination eines Kegelformsystems mit einem Plansystem, also, im verspannten Zustand, das Auflegen der Kegelhülse auf dem kegelförmigen Auflager zum einen auf den Kegelmantelflächen und zum anderen auf einer planen Fläche. Der Abstand zwischen Palette und Palettenaufnahmetisch wird also nicht nur durch die Kegelform des Auflagers und der Kegelhülse, sondern auch durch die plane Auflage des ringförmigen Vorsprungs auf der ringförmigen Planauflage bestimmt. Es ist also nicht nur ein leicht durchzuführender Zentriervorgang, sondern auch das Vorhandensein eines wieder leicht lösbaren Schrumpfsitzes und höhenverstellbarer Planflächen für einen optimalen Sitz und für einen begrenzten Positionierungsweg der Kegelhülse auf dem kegelförmigen Auflager als besondere Vorteile der Erfindung anzuführen.

Bei einer Anordnung von vier Auflagern auf einem Palettenaufnahmetisch zur Aufnahme einer Palette kann ein zweites kegelförmiges Auflager eine reduzierte Zentrierauflagefläche in der Art haben, daß die Mantelfläche des Kegels des Auflagers längs verlaufende Unterbrechungen aufweist, also beispielsweise als Schwertbolzen ausgebildet sein kann. Ein solcher Schwertbolzen trägt eine Kegelhülse nur in Umfangsrichtung, und dies nur stellenweise. Werden nun die zwei restlichen Auflager in Form eines Kegels, jedoch mit verbleibendem Spalt zwischen dem Kegel und der Kegelhülse selbst im verspannten Zustand ausgebildet, wirken also als ringförmige Auflager nur in vertikaler Richtung und nicht in Umfangrichtung als Stützen, so weist das gesamte Positionierungs- und Spannsystem ein vorgegebenes Umfangsspiel zwischen Palette und Palettenaufnahmetisch von nicht mehr als 5 µm auf, wodurch eine Verklemmung in der nächsten Diagonalen von der Palette gegenüber dem Palettenaufnahmetisch nicht mehr möglich ist. Einer Überbestimmung des gesamten Systems ist somit vorgebeugt.

In einer vorteilhaften Ausführungsform kann in einem Zwischenraum zwischen Auflager und Hülse während des Positionierens und Verspannens der Palette auf dem Palettenaufnahmetisch Luft über ein dafür vorgesehenes Zuführungssystem zugeführt werden, um während des Positionierens die Kegelwände der Kegelhülse als auch des kegelförmigen Auflagers während des Positionierungsvorganges durch die wände entlang streichende Luft von Spänen und Verunreinigungen zu reinigen und eine Kontrolle des Zusammenwirkens von Auflager und Hülse mittels der Mengen an einströmender Luft durchzuführen.

Weitere Einzelheiten, Vorteile und Weiterbildungen der Erfindung ergeben sich aus der folgenden Beschreibung des bevorzugten Ausführungsbeispiels und der Bezugnahme auf die Zeichnung. Es zeigen:
- Fig. 1: eine Querschnittsansicht eines Auflagers zusammen mit der damit zusammenwirkenden Kegelhülse, worin in der linksseitigen Hälfte, von der Mittelachse aus betrachtet, eine Ausführung gemäß dem Stand der Technik und in der rechtsseitigen Hälfte eine erfindungsgemäße Ausführungsform gezeigt wird,
- Fig. 2: eine schematische Draufsicht auf einen Palettenaufnahmetisch .einer erfindungsgemäßen Ausführungsform des Positionierungs- und Spannsystems.

Die Erfindung ist nicht ausschließlich, jedoch vorzugsweise für das Spannen und Positionieren einer werkstücktragenden Palette auf einem Palettenaufnahmetisch mit mindestens zwei auf dem Palettenaufnahmetisch angeordneten, kegelförmigen Auflagern und mindestens zwei mit den kegelförmigen Auflagern zusammenwirkenden Kegelhülsen, die mit der Palette tischseitig verbunden sind, anwendbar.

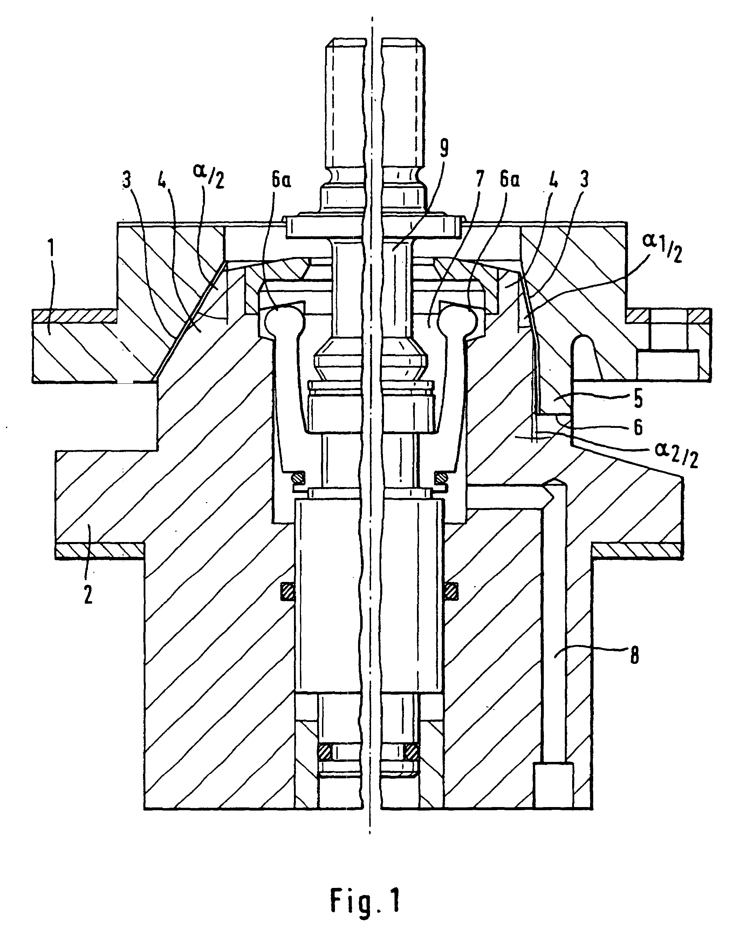

Fig. 1 zeigt den unteren Bereich einer Palette 1, der auf Auflagern 4, die auf einem Palettenaufnahmetisch 2 angeordnet sind, aufsitzt. Die Unterseite der Palette ist mit einer Hülse, vorzugsweise einer Kegelhülse 3 ausgestattet, in der ein Zapfen 9 angeordnet ist, welcher durch eine klauenartige Spannzange 6a, die in dem Auflager 4 des Palettenaufnahmetisches vorgesehen ist, ergriffen und angezogen wird.

Die linksseitige abgebildete Ausgestaltungsform gemäß dem Stand der Technik setzt sich aus einem Kegel bzw. Kegelstumpf 4 und einer damit zusammenwirkenden Kegelhülse 3 zusammen. Auf dem Kegelstumpf 4 liegt die Kegelhülse mit dem Palettenunterteil 1 auf, wobei die Hälfte des Kegelwinkels α in etwa 30° beträgt, demzufolge der gesamte Kegelwinkel 60° in seiner Größe darstellt. Das Aufliegen der Kegelhülse 3 auf dem kegelförmigen Auflager findet vorrangig an den Kegelmantelflächen des kegelförmigen Auflagers statt, wie aus der linken Hälfte der Fig. 1 ersichtlich ist.

Eine derartige Ausgestaltung von allen vier Auflagepunkten der Palette auf dem Palettenaufnahmetisch führt zwangsläufig dazu, daß durch das Positionieren in Tischebene als auch senkrecht zu der Tischebene nur mittel Kegeln mit relativ großen Kegelwinkeln ein solches System zweimal vierfach überbestimmt ist. Demzufolge würde eine Maßungenauigkeit an einem der Kegelflächen, wie es z.B. durch Verunreinigungen und Schmutzresten auf der Mantelfläche eines Kegels gegeben sein kann, die gesamte Anordnung ungenau und instabil werden lassen.

Die rechte Hälfte in Fig. 1, in Bezug auf die vertikal verlaufende Mittelachse der Figur betrachtet, zeigt eine erfindungsgemäße Ausführungsform des Positionierungs- und Spannsystems, worin das kegelförmige Auflager 4 in seiner zweistufigen Kegelform einen ersten Kegelwinkel α₁ und einen zweiten Kegelwinkel α₂ aufweist. Vorzugsweise sind diese Kegelwinkel in einer Winkelgrößenordnung von 1° bis 30°, insbesondere ca. 15°. Durch solche steil ausgebildeten Kegelformen des kegelförmigen Auflagers 4 sowie der damit zusammenwirkenden Kegelhülse 3 ist es möglich, eine selbsthemmende Verbindung zwischen Kegelhülse und kegelförmigem Auflager zu erreichen.

Des weiteren ist ein ringförmiger Vorsprung 5, der in diesem Fall gleichzeitig die zweite Kegelstufe mit dem Kegelwinkel α₂ des kegelförmigen Auflagers bzw. der Kegelhülse bildet, an dem unteren, also tischseitigen, Ende der Kegelhülse 3 ausgebildet, der im verspannten Zustand auf einer ringförmigen Planauflage 6 des Auflagers 4 aufsetzt.

Wird nun die Palette auf dem Palettenaufnahmetisch aufgesetzt, so findet zunächst eine Zentrierung mittels des kegelförmigen Abschnittes des Auflagers 4 und der Hülse 3 über einen zentrierweg von ca. 10 mm statt. Nach dem Aufsetzen der Kegelhülse auf den Kegelmantelflächen des kegelförmigen Auflagers 4 ist, bevor ein Spannvorgang einsetzt, ein Spalt zwischen dem ringförmigen Vorsprung 5 und der ringförmigen Planauflage 6 von ca. 1/10 mm Ausdehnung vorhanden. Wird nun mittels klauenartiger Spannzangen der Spannvorgang eingeleitet und die Palette 1 auf dem Palettenaufnahmetisch 2 heruntergezogen, so wird der ringförmige Vorsprung 5 elastisch deformiert, also gedehnt, und das Auflager 4 in seinem Kegelformabschnitt gestaucht. Hierdurch schließt sich der oben erwähnte Spalt zwischen dem ringförmigen Vorsprung 5 und der ringförmigen Planauflage 6. Die Planauflage 6, die selber höhenverstellbar ist (nicht dargestellt), bestimmt also das Ausmaß der erforderlichen Dehnung bzw. Stauchung der Kegelhülse 3 bzw. des kegelförmigen Auflagers 4. Wenn die Planauflage 6 tiefer angeordnet ist, so findet eine stärkere Dehnung bzw. Stauchung statt. Hieraus wird ersichtlich, daß durch das Zusammenspiel eines Plansystems, wie es durch die Planauflage 6 und den ringförmigen Vorsprung 5 dargestellt wird, und dem Kegelformsystem eine begrenzte Dehnung/Stauchung der Kegelhülse/des kegelförmigen Auflagers möglich ist und somit ein Schrumpfsitz der Kegelhülse auf dem kegelförmigen Auflager gegeben ist. Dieser Schrumpfsitz hat zur Folge, daß die Verbindung zwischen Kegelhülse und kegelförmigem Auflager wieder lösbar aufgrund der elastischen Deformierung ist.

Einem Zwischenraum 7 zwischen Auflager 4 und damit zusammenwirkender Hülse 3 bzw. dem mit der Hülse verbundenen Zapfen 5 wird über eine Zuleitung 8 Luft oder jedes andere gasförmige Medium zugeleitet, die beim Zusammenfügen der Kegelhülse 3 mit dem kegelförmigen Auflager 4 über die Kegelmantelflächen und die Flächen der Planauflage 6 entweicht und diese dadurch reinigt. Dadurch wird ein Reinigungseffekt der Auflager und der damit zusammenwirkenden Kegelhülsen während des Positionierens der Palette 1 auf dem Palettenaufnahmetisch 2 erreicht. Zusätzlich kann diese oder eine separat zugeführte Luft dazu dienen, das Zusammenwirken von Auflager und Kegelhülse zu kontrollieren, also beispielsweise die Anwesenheit einer Kegelhülse auf einem kegelförmigen Auflager mittels Drucküberwachung der zugeführten Luft zu überprüfen.

Des weiteren ist es zu Reinigungszwecken und zu Zwecken der besseren und feiner abgestimmten Positionierung der tragenden Kegelhülse 3 möglich, diese mittels jedes denkbaren Fluids während des Positionierungsvorganges auszuspritzen.

Bevor die Zentrierwirkung der Kegel von den kegelförmigen Auflagern während des Positionierungsvorganges einsetzen, ist eine vorzentrierung beim Positionieren der Palette auf dem Palettenaufnahmetisch mittels einer Energiekupplungseinrichtung in der Flächenmitte des Palettenaufnahmetisches denkbar.

Der Palettenaufnahmetisch kann als ein Rundtisch mit einer sich drehenden Palettenaufnahme, deren Drehachse in Richtung der Tischoberflächennormalen weist, ausgebildet sein.

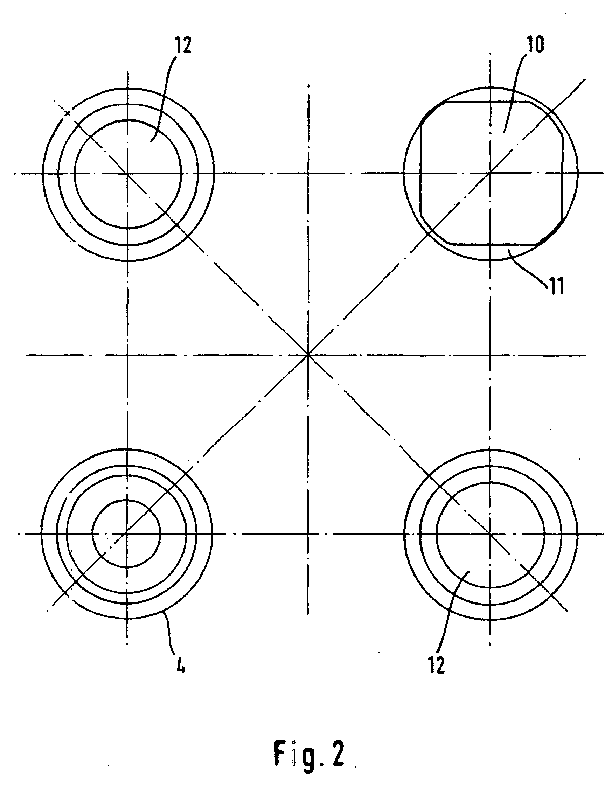

Fig. 2 zeigt in Draufsicht einen Palettenaufnahmetisch mit vier über die Tischfläche hinweg verteilte Auflager. Das Auflager 4 entspricht hierbei einem bereits im Zusammenhang mit Fig. 1 näher beschriebenen erfindungsgemäßen Auflager.

Das Auflager 10 weist ebenfalls die Form eines Kegels auf, jedoch mit einer Kegelmantelfläche, die längs verlaufende Unterbrechungen 11 aufweist, also Unterbrechungen, die sich von einer (gedachten) Kegelspitze bis zum Kegelfuß erstrecken. Durch eine solche reduzierte Zentrierauflage entsteht ein Kegel mit einer Mantelfläche, die beispielsweise aus vier Abschnitten bestehen kann. Eine Ausführung in Form eines Schwertbolzens ist ebenso denkbar. Die Unterbrechungen können durch schräges Abfräsen der Mantelflächen geschaffen werden. Ein derartiges Auflager trägt eine damit zusammenwirkende Kegelhülse lediglich in Umfangsrichtung und ist diagonal zu dem Auflager 4 angeordnet. Die Kombination dieser beiden Auflager 4 und 10 führt dazu, daß ein vorgegebenes Umfangsspiel der Palette 1 gegenüber dem Palettenaufnahmetisch ca. 5 µm beträgt und somit ein Verklemmen der Palette auf dem Palettenaufnahmetisch während oder nach dem Spannvorgang in der Diagonalen nicht möglich ist.

Die beiden Auflager 12 zeichnen sich durch eine ringförmige Planauflage, die mit einem ringförmigen Vorsprung an der Kegelhülse zusammenwirkt, ebenso wie die beiden erstgenannten Auflager, aus. Diese Auflager weisen ebenso kegelförmige Abschnitte auf, die sich jedoch nicht während des Spannvorganges mit ihren Mantelflächen mit den Innenflächen der damit zusammenwirkenden Kegelhülsen verbinden. Es wird vielmehr ein Spalt selbst während des Spannvorganges zwischen Auflager und Kegelhülse beibehalten, wodurch die Kegelmantelflächen des kegelförmigen Auflagers nicht als tragende Flächen wirken. Die ringförmige Planauflage jedoch wirkt in senkrecht zu der Tischoberfläche wirkenden Richtung als Abstützung für die Kegelhülse und der damit verbundenen Palette 1.

Jede der Auflager 4, 10 und 12 ist mit einer klauenförmigen Spannzange 6 ausgestattet.

Alle kegelförmigen Auflager sind als ausgebildete Kegel oder abgeflachte Kegel denkbar.

Durch das erfindungsgemäße Anordnen von vier unterschiedlichen Auflagern, wie sie in Fig. 2 dargestellt werden, ist eine Überbestimmtheit des gesamten Systems, die sich durch das Anordnen von vier gleichen kegelförmigen Auflagern mit großem Kegelwinkel ergibt, ausgeschaltet.

## Patentansprüche

1. Positionierungs- und Spannsystem, insbesondere zum Positionieren und Spannen einer werkstücktragenden Palette (1) auf einem Palettenaufnahmetisch (2), mit mindestens zwei auf dem Palettenaufnahmetisch (2) verteilt angeordneten, kegelförmigen Auflagern (4) und mindestens zwei mit den kegelförmigen Auf-lagern zusammenwirkenden Kegelhülsen (3), die mit der Palette (1) tischseitig verbunden sind, **dadurch gekennzeichnet, daß** der mindestens eine Kegelwinkel (α₁, α₂) einer der kegelförmigen Auflager (4) und der damit zusammenwirkenden Kegelhülse (3) eine geeignete Winkelgröße zum Eintritt einer selbsthemmenden Verbindung zwischen Auflager und Kegelhülse bei Zusammenwirken derjenigen aufweist.

2. System nach Anspruch 1, **dadurch gekennzeichnet, daß** das kegelförmige Auflager und die damit zusammenwirkende Kegelhülse (3) eine zweistufige Kegelform mit einem von der Kegelspitze aus betrachteten ersten (α₁) und zweiten Kegelwinkel (α₂) mit geringer Winkelgröße aufweisen.

3. System nach Anspruch 1 oder 2, **dadurch gekennzeichnet, daß** die Winkelgrößen in einem Winkelbereich von 1° bis 30° liegen.

4. System nach einem oder mehreren der vorhergehenden Ansprüche, **dadurch gekennzeichnet, daß** die Kegelhülse (3) tischseitig einen ringförmigen vorsprung (5) und das kegelförmige Auflager (4) eine damit zusammenwirkende ringförmige Planauflage (6) aufweisen.

5. System nach einem oder mehreren der vorhergehenden Ansprüche, **dadurch gekennzeichnet, daß** die Kegelhülse (3) in ihrem Umfang begrenzt dehnbar ist, und das kegelförmige Auflager (4) in seinem Umfang begrenzt stauchbar ist.

6. System nach einem oder mehreren der vorhergehenden Ansprüche, **dadurch gekennzeichnet, daß** neben dem einen kegelförmigen Auflager (4) mindestens ein weiteres Auflager (10) mit der Form eines Kegels mit einem Kegelmantel, der längsverlaufende Unterbrechungen (11) aufweist, auf dem Palettenaufnahmetisch (2) angeordnet ist.

7. System nach einem oder mehreren der vorhergehenden Ansprüche, **dadurch gekennzeichnet, daß** mindestens ein weiteres Auflager (12) in Form einer ringförmigen Planauflage angeordnet ist.

8. System nach Anspruch 7, **dadurch gekennzeichnet, daß** mindestens eine mit der ringförmigen Planauflage zusammenwirkende Hülse mit einem ringförmigen Vorsprung mit der Palette (1) tischseitig verbunden ist.

9. System nach einem oder mehreren der vorhergehenden Ansprüche, **dadurch gekennzeichnet, daß** ein Zwischenraum (7) zwischen Auflager (4) und damit zusammenwirkender Hülse (3) für die Zuführung von Luft dient.

10. System nach einem oder mehreren der vorhergehenden Ansprüche, **dadurch gekennzeichnet, daß** eine Einrichtung zur Kontrolle des Zusammenwirkens von Auflager und Hülse mittels der in den Zwischenraum (7) einströmenden Luft dem System zugeordnet ist.

11. System nach einem oder mehreren der vorhergehenden Ansprüche, **dadurch gekennzeichnet, daß** für einen Vorzentrierungsvorgang beim Positionieren der Palette (1) auf dem Palettenaufnahmetisch (2) eine Energiekupplungseinrichtung in der Flächenmitte angebracht ist.

12. System nach einem oder mehreren der vorhergehenden Ansprüche, **dadurch gekennzeichnet, daß** der Palettenaufnahmetisch als ein Rundtisch ausgebildet ist, auf dem eine Palettenaufnahme um eine in Richtung der Tischoberflächennormale weisende Drehachse drehbar gelagert ist.

## Claims

1. Positioning and clamping system, in particular for positioning and clamping a pallet bearing a workpiece (1) on a pallet receiving table (2), with at least two conical supports (4) arranged distributed on the pallet receiving table (2) and at least two tapered sleeves (3), which are connected with the pallet (1) on the side of the table and which co-operate with the conical supports, **characterised in that** at least one cone angle (α1, α2) of one of the conical supports (4) and the tapered sleeve (3) co-operating therewith has an appropriate angle size to introduce a self-locking connection between support and tapered sleeve upon co-operation thereof.

2. System according to claim 1, **characterised in that** the conical support and the tapered sleeve (3) co-operating therewith have a two-stage conical form with, viewed from the cone tip, a first (α 1) and a second (α 2) cone angle with small angle size.

3. System according to claim 1 or two, **characterised in that** the angle size is within an angle range of 1° to 30°.

4. System according to one or more of the preceding claims, **characterised in that** the tapered sleeve (3) has an annular projection (5) on the side of the table and the conical support (4) has an annular planar rest (6) which co-operates therewith.

5. System according to one or more of the preceding claims, **characterised in that** the tapered sleeve (3) can be extended in its circumference to a limited degree, and the conical support (4) can be compressed in its circumference to a limited degree.

6. System according to one or more of the preceding claims, **characterised in that,** in addition to the one conical support (4), at least one other support (10) with the shape of a cone with a cone envelope, which has longitudinally extending interruptions (11), is arranged on the pallet receiving table (2).

7. System according to one or more of the preceding claims, **characterised in that** at least one other support (12) in the shape of an annular planar rest is arranged.

8. System according to claim 7, **characterised in that** at least one sleeve, which co-operates with the planar rest, is connected on the side of the table with an annular projection with the pallet (1).

9. System according to one or more of the preceding claims, **characterised in that** a gap (7) between the support (4) and the sleeve (3) co-operating with it serves to supply air.

10. System according to one or more of the preceding claims, **characterised in that** a device for controlling of the co-operation between support and sleeve by means of the air flowing into the gap (7) is associated with the system.

11. System according to one or more of the preceding claims, **characterised in that** for the pre-centering process during positioning of the pallet (1) on the pallet receiving table (2) an energy coupling device is arranged in the center of the surface.

12. System according to one or more of the preceding claims, **characterised in that** the pallet receiving table is formed as a circular table where a pallet receiving device is supported rotatably around a rotational axis which points in the direction of the table surface normal line.

## Revendications

1. Système de positionnement et de serrage, plus particulièrement prévu pour le positionnement et le serrage d'une palette (1) portant un matériau à usiner, sur une table (2) prévue à cet effet, possédant au moins deux éléments coniques de soutien (4) distribués sur la table (2) recevant la palette et au moins deux douilles coniques (3) ajustées aux éléments coniques de soutien et fixées sur la palette (1) du côté de la table, **caractérisé en ce qu'**au moins un angle (a1, a2) de l'un des éléments conique de soutien (4) et d'une des douilles coniques correspondantes (3) possède une valeur angulaire appropriée pour la réalisation d'une connexion auto-bloquante entre l'élément de soutien et la douille conique lors de leur rapprochement mutuel.

2. Système selon la revendication 1, **caractérisé en ce que** l'élément conique de soutien et la douille correspondante (3) possèdent une section conique divisée en deux parties avec un premier angle (a1) situé au niveau de la pointe du cône, et un deuxième angle (a2) ayant une valeur angulaire inférieure à celle du premier.

3. Système selon la revendication 1 ou 2, **caractérisé en ce que** les valeurs angulaires sont situées entre 1° et 30°.

4. Système selon l'une ou plusieurs des revendications précédentes, **caractérisé en ce que** la partie de la douille conique (3) située du côté de la table possède un bord en forme d'anneau (5) prévu pour venir au contact de l'élément conique de soutien (4) avec une surface d'appui plane (6).

5. Système selon l'une ou plusieurs des revendications précédentes, **caractérisé en ce que** le diamètre de la douille conique (3) est dans une certaine limite extensible et **en ce que** le diamètre de l'élément conique de soutien (4) est dans une certaine limite compressible.

6. Système selon l'une ou plusieurs des revendications précédentes, **caractérisé en ce qu'** il existe à côté du premier élément conique de soutien (4) sur la table (2) recevant la palette au moins un autre élément de soutien (10) possédant une surface conique avec des rainures longitudinales (11).

7. Système selon l'une ou plusieurs des revendications précédentes, **caractérisé en ce qu'**il existe au moins un élément de soutien supplémentaire (12) possédant un appui plan en forme d'anneau.

8. Système selon la revendication 7, **caractérisé en ce qu'**au moins une douille, possédant un bord d'appui en forme d'anneau correspondant à l'appui plan en forme d'anneau, est fixé sur la palette (1) du côté de la table.

9. Système selon l'une ou plusieurs des revendications précédentes, **caractérisé en ce qu'**un espace (7) situé entre l'élément de soutien (4) et la douille (3) correspondante est prévu afin de pouvoir introduire de l'air.

10. Système selon l'une ou plusieurs des revendications précédentes, **caractérisé en ce qu'**un dispositif contrôlant l'interaction entre l'élément de soutien et la douille à l'aide de l'air introduite dans l'espace (7) est couplé au système de positionnement et de serrage.

11. Système selon l'une ou plusieurs des revendications précédentes, **caractérisé en ce qu'**un dispositif de transfert d'énergie est situé au milieu de la surface pour un pré-centrage au moment du positionnement de la palette (1) sur la table (2).

12. Système selon l'une ou plusieurs des revendications précédentes, **caractérisé en ce que** la table recevant la palette possède une forme ronde et un dispositif saisissant la palette pouvant pivoter autour d'un axe perpendiculaire à la surface de la table.
